# EUROPEAN PATENT APPLICATION

(11) **EP 3 709 073 A1**
(43) Date of publication of application: **16.09.2020**
(21) Application number: 20158689.8
(22) Date of filing: 21.02.2020
(51) Int. Cl.: G02B 27/01, G02B 27/12, F21V 8/00, G02B 27/14

(54) **NEAR-EYE DISPLAY DEVICE**

(30) Priority: 13.03.2019 CN 201910186957
(71) Applicant: Coretronic Corporation, Hsin-Chu 300 (TW)
(72) Inventor: LO, Yi-Chien, 300 Hsin-Chu (TW); CHIEN, Hung-Ta, 300 Hsin-Chu (TW)
(74) Representative: Ter Meer Steinmeister & Partner

(57) **Abstract**

A near-eye display device including a light engine, a first light waveguide, and a second light waveguide is provided. The light engine provides an image. The first light waveguide reproduces the image of a view angle region in a first direction. The first light waveguide includes a plurality of first beam splitters arranged along the first direction. The second light waveguide reproduces the image of a view angle region in a second direction. The second light waveguide includes a plurality of second beam splitters arranged along the second direction. The second light waveguide has a first surface and a second surface opposite to the first surface. The first surface faces the first light waveguide. An included angle is present between each of the second beam splitters and the second surface. The included angle is between 0 and 90 degrees and is not equal to 45 degrees.

## Description

### BACKGROUND OF THE INVENTION

### [Field of the Invention]

The disclosure relates to a display device, and more particularly, to a near-eye display device.

### [Description of Related Art]

In the field of near-eye display for augmented reality (AR), there are two main mechanisms for introducing image information into the human eye, including a freeform prism and a waveguide plate. The main issues with the freeform prism are the large thickness and weight and the introduction of significant image distortion. In contrast, the framework using the waveguide plate is obviously thinner and lighter and has a larger eye box. However, although the framework of the waveguide plate does not introduce image distortion, it introduces several image display defects, such as ghosting, a mirror image, reduced uniformity, chromatic aberration, etc. There are currently three main frameworks of waveguide plates, including the holographic type, the surface relief grating type, and the geometrical beam splitter type. Due to the limitation of chromatic aberration and the influence on the ambient light, the former two are faced with more challenges than the geometrical beam splitter-type waveguide plate.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention provides a near-eye display device that can eliminate the defect of a mirror image.

Other purposes and advantages of the invention may be further understood from the technical features recited herein. To achieve one, part, or all of the above purposes or other purposes, an embodiment of the invention provides a near-eye display device. The near-eye display device includes a light engine, a first light waveguide, and a second light waveguide. The light engine provides an image. The first light waveguide reproduces the image of a view angle region in a first direction. The first light waveguide includes a plurality of first beam splitters arranged along the first direction. The second light waveguide is disposed at an incident light area on one side of the first light waveguide. The second light waveguide reproduces the image of a view angle region in a second direction. The second light waveguide includes a plurality of second beam splitters arranged along the second direction. The second light waveguide has a first surface and a second surface opposite to the first surface. The first surface faces the first light waveguide.

Preferably, an included angle is present between each of the second beam splitters and the second surface. The included angle is between 0 and 90 degrees and is not equal to 45 degrees.

Preferably, the included angle may be an included angle between 15 and 44 degrees or between 46 and 60 degrees.

Preferably, the incident light area of the first light waveguide may correspondingly cover at least two of the plurality of first beam splitters.

Preferably, a width of the incident light area of the first light waveguide in the first direction may be d, a total width of the second light waveguide in the first direction is D, and d and D may satisfy: 0.5D < d < 2D.

Preferably, the included angle may be equal to 30 degrees.

Preferably, the image provided by the light engine may enter the second light waveguide.

Preferably, the image provided by the light engine may be guided to the incident light area of the first light waveguide through the plurality of second beam splitters.

Preferably, the image may enter the first light waveguide via the incident light area and is guided to a projection target through the plurality of first beam splitters.

Based on the above, the near-eye display device of the embodiment of the invention has a two-dimensional geometry-type waveguide plate framework, which may eliminate a mirror image.

Other objectives, features and advantages of the invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view of a near-eye display device according to an embodiment of the invention.
FIG. 2 is a top view of the near-eye display device according to the embodiment of FIG. 1.
FIG. 3 is a side view of the near-eye display device according to the embodiment of FIG. 1.
FIG. 4 is a side view of a light engine and a second light waveguide according to the embodiment of FIG. 1.
FIG. 5 is a side view of the second light waveguide according to the embodiment of FIG. 1.
FIG. 6 is a schematic view of an input image according to an embodiment of the invention.
FIG. 7 is a schematic view of an output image according to an embodiment of the invention.
FIG. 8 is a schematic view of an output image according to a related example of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

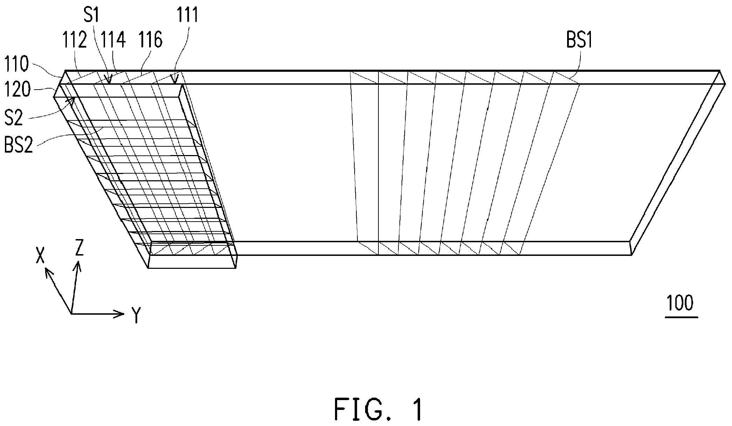

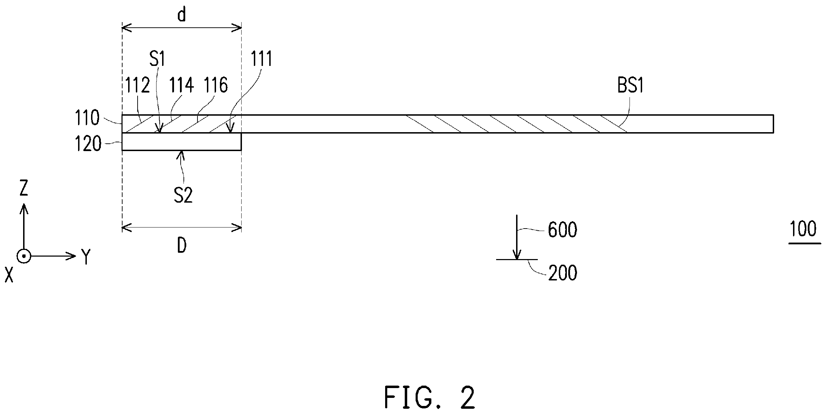

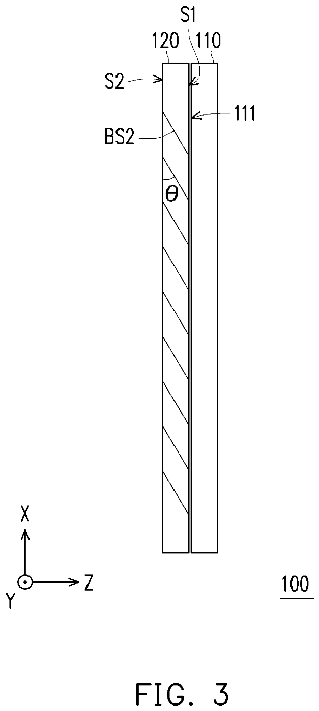

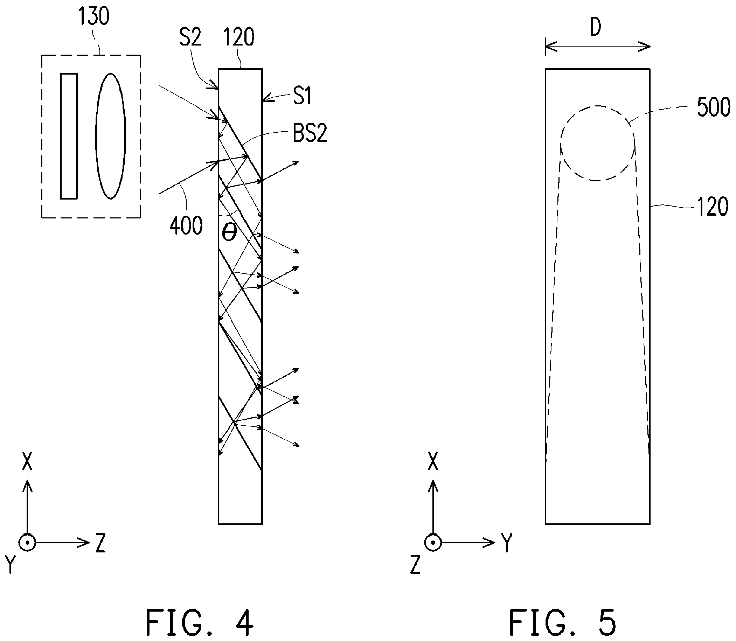

FIG. 1 is a schematic view of a near-eye display device according to an embodiment of the invention. FIG. 2 is a top view of the near-eye display device according to the embodiment of FIG. 1. FIG. 3 is a side view of the near-eye display device according to the embodiment of FIG. 1. FIG. 4 is a side view of a light engine and a second light waveguide according to the embodiment of FIG. 1. FIG. 5 is a side view of the second light waveguide according to the embodiment of FIG. 1. Referring to FIG. 1 to FIG. 5, a near-eye display device 100 of the embodiment includes a light engine 130, a first light waveguide 110, and a second light waveguide 120. FIG. 1 shows a two-dimensional waveguide plate framework configured to eliminate a mirror image. In the embodiment, the near-eye display device 100 projects an image 600, in which the mirror image is eliminated, to a projection target 200, such as an eye pupil of a user.

In the embodiment, the light engine 130 provides an image 400. The first light waveguide 110 reproduces the image of a view angle region in a first direction Y. The first light waveguide 110 includes a plurality of first beam splitters BS1 arranged along the first direction Y. The plurality of first beam splitters BS1 are spaced apart from each other between two opposite surfaces of the first light waveguide 110. The second light waveguide 120 is disposed at an incident light area 111 on one side of the first light waveguide 110. The second light waveguide 120 reproduces the image of a view angle region in a second direction X. The second light waveguide 120 includes a plurality of second beam splitters BS2 arranged along the second direction X. The second light waveguide 120 has a first surface S1 and a second surface S2. The second surface S2 is opposite to the first surface S1 in a third direction Z. The first direction Y, the second direction X and the third direction Z are perpendicular to each other. The first surface S1 faces the first light waveguide 110 and corresponds to the incident light area 111 of the first light waveguide 110. The plurality of second beam splitters BS2 are parallel and spaced apart from each other between the first surface S1 and the second surface S2 of the second light waveguide 120. An included angle θ is present between the second beam splitters BS2 and the second surface S2. The included angle θ is between 0 and 90 degrees and is not equal to 45 degrees. As shown in FIG. 3, for example, the included angle θ is an included angle between 15 and 44 degrees or between 46 and 60 degrees. In FIG. 4, the included angle θ is, for example, 30 degrees, and the angle of the emission light is the same as the angle of the incident light regardless of where it is located.

A width d of the incident light area 111 of the first light waveguide 110 in the first direction Y and a total width D of the second light waveguide 120 in the first direction Y satisfy: 0.5D < d < 2D. In the embodiment, the width d of the incident light area 111 of the first light waveguide 110 in the first direction Y may be equal to the total width D of the second light waveguide 120 in the first direction Y (as shown in FIG. 2), and the width d of the incident light area 111 of the first light waveguide 110 in the first direction Y may also be close to the total width D of the second light waveguide 120 in the first direction Y. In FIG. 4 and FIG. 5, after the image 400 provided from the light engine 130 enters the second light waveguide 120, the first direction Y dimension (horizontal dimension) of the image 400 does not undergo total reflection by the surfaces on the left and right sides when transmitted in the second light waveguide 120. Therefore, the mirror image generated due to total reflection in the first direction Y dimension can be eliminated.

In the embodiment, as an incident light port 500 through which the image 400 provided by the light engine 130 is transmitted to the second light waveguide 120 is enlarged, the incident light area of the first light waveguide 110 may correspondingly cover a beam splitter framework including more than one beam splitter in an area corresponding to a total light output area of the second light waveguide 120 for outputting light. For example, in FIG. 1 and FIG. 2, the incident light area 111 of the first light waveguide 110 correspondingly covers the area which at least two first beam splitters are arranged in. Here, the incident light area 111 covers the area that four first beam splitters are arranged in as an example, but the invention is not limited to this number. In the embodiment, the incident light area 111 covers four first beam splitters which are parallel and spaced apart from each other, and the inclination direction of the first beam splitters covered by the incident light area 111 is opposite to the inclination direction of the other first beam splitters BS1. In other words, the inclination direction of the first beam splitters covered by the incident light area 111 is configured to guide the image from the second light waveguide 120 to the other first beam splitters BS1, and the inclination direction of the other first beam splitters BS1 is configured to guide the received image to the projection target 200. The first beam splitters 112, 114, 116 are arranged along the first direction Y. The first beam splitter 112 covered by the incident light area 111 is, for example, a beam splitter having a reflectance of 100%. The first beam splitter 114 is, for example, a beam splitter having a reflectance of 50% and a transmittance of 50%. The first beam splitter 116 is, for example, a beam splitter having a reflectance of 33% and a transmittance of 67%. In other embodiments, the first beam splitter 112 having a reflectance of 100% may be replaced with a reflection mirror or any optical component that can totally reflect the light from the second light waveguide 120 to the first beam splitter 114, and the invention is not limited thereto. In addition, since the plurality of beam splitters are arranged at the incident light area 111 of the first light waveguide 110, the size increase of the first light waveguide due to the enlarged incident light port 500 can also be reduced.

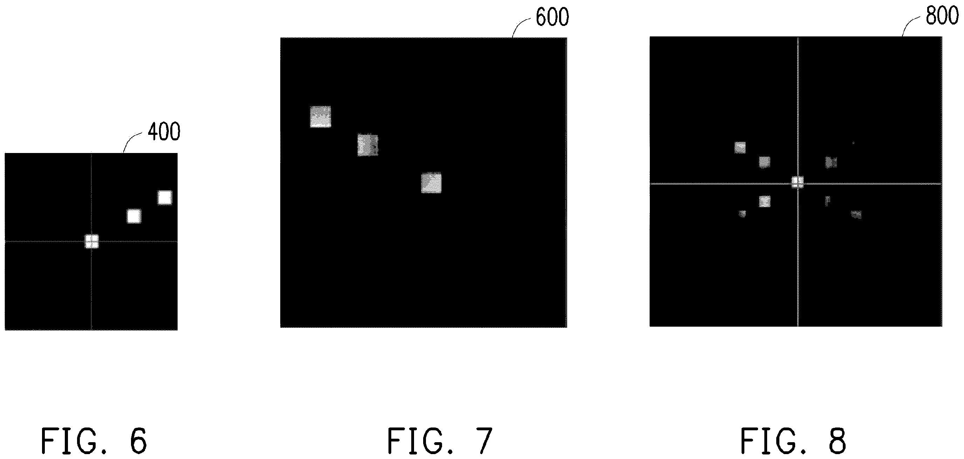

FIG. 6 is a schematic view of an input image according to an embodiment of the invention. FIG. 7 is a schematic view of an output image according to an embodiment of the invention. FIG. 8 is a schematic view of an output image according to a related example of the invention. Referring to FIG. 6 to FIG. 8, an input image 400 shown in FIG. 6 is, for example, the image 400 input from the light engine 130 to the second light waveguide 120 as shown in FIG. 4. An output image 600 shown in FIG. 7 is, for example, the image 600 output from the first light waveguide 110 to the projection target 200 (e.g., an eye pupil) as shown in FIG. 2.

In the related example of FIG. 8, if the included angle θ between the second beam splitters of the second light waveguide and the surface of the second light waveguide is equal to 45 degrees, the image in the view angle of the second direction X dimension (vertical dimension) provided by the light engine 130 is symmetrically distributed when transmitted in the second light waveguide 120. Therefore, an output image 800 of the second light waveguide includes a mirror image of the vertical dimension caused by total reflection during transmission. In the embodiment of FIG. 6 and FIG. 7, if the included angle θ between the second beam splitters of the second light waveguide and the surface of the second light waveguide is equal to 30 degrees, the image in the view angle of the vertical dimension provided by the light engine is asymmetrically distributed when transmitted in the second light waveguide 120 (as shown in FIG. 5), until the image is transmitted to the plurality of second beam splitters BS2. When the image is transmitted to the plurality of second beam splitters BS2, the image is converted to be symmetrically distributed (as shown in FIG. 4) and reflected to the first light waveguide 110. Therefore, the mirror image in the second direction X can be eliminated. Accordingly, in the framework of the embodiments of the invention, a virtual image result without a mirror image can be obtained, as shown in FIG. 7.

In summary of the above, the embodiments of the invention have at least one of the following advantages or effects. In the embodiments of the invention, the near-eye display device has a two-dimensional waveguide plate framework including two light waveguides. At least two beam splitters are provided in the incident light area of the first light waveguide to receive an image from the second light waveguide. The included angle between the second beam splitters of the second light waveguide and the surface of the second light waveguide is not equal to 45 degrees. In addition, the width of the second light waveguide is increased so that the image does not undergo total reflection by the surfaces on the two sides when transmitted in the second light waveguide. Therefore, in the framework of the embodiments of the invention, the mirror image can be eliminated.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A near-eye display device (100) comprising a light engine (130), a first light waveguide (110), and a second light waveguide (120), wherein
the light engine (130) is configured to provide an image (400),
the first light waveguide (110) is configured to reproduce the image of a view angle region in a first direction (Y), and comprises a plurality of first beam splitters (BS1) arranged along the first direction (Y), and
the second light waveguide (120) is disposed at an incident light area (111) on one side of the first light waveguide (110), is configured to reproduce the image of a view angle region in a second direction (X), and comprises a plurality of second beam splitters (BS2) arranged along the second direction (X),
wherein the second light waveguide (120) has a first surface (S1) and a second surface (S2) opposite to the first surface (S1), the first surface (S1) faces the first light waveguide (110), an included angle is present between each of the plurality of second beam splitters (BS2) and the second surface (S2), and the included angle is between 0 and 90 degrees and is not equal to 45 degrees.

2. The near-eye display device according to claim 1, **characterized in that** the included angle is an included angle between 15 and 44 degrees or between 46 and 60 degrees.

3. The near-eye display device according to claim 1 or 2, **characterized in that** the incident light area (111) of the first light waveguide (110) correspondingly covers at least two of the plurality of first beam splitters (BS1).

4. The near-eye display device according to claim 1, 2 or 3, **characterized in that** a width of the incident light area (111) of the first light waveguide (110) in the first direction (Y) is d, a total width of the second light waveguide (120) in the first direction (Y) is D, and d and D satisfy: 0.5D < d < 2D.

5. The near-eye display device according to any one of the preceding claims, **characterized in that** the included angle is equal to 30 degrees.

6. The near-eye display device according to any one of the preceding claims, **characterized in that** the image (400) provided by the light engine (130) is configured to enter the second light waveguide (120) and is guided to the incident light area (111) of the first light waveguide (110) through the plurality of second beam splitters (BS2).

7. The near-eye display device according to any one of the preceding claims, **characterized in that**, the image is configured to enter the first light waveguide (110) via the incident light area (111) and is guided to a projection target (200) through the plurality of first beam splitters (BS1).
